# EUROPÄISCHE PATENTSCHRIFT

(11) **EP 1 031 021 B1**
(45) Veröffentlichungstag und Bekanntmachung des Hinweises auf die Patenterteilung: **21.05.2003**
(21) Anmeldenummer: 98962328.5
(22) Anmeldetag: 10.11.1998
(51) Int. Cl.: G01N 3/00, G01N 19/04, H01R 4/02, H01R 43/02

(54) **PRÜFVERFAHREN ZUM ZERSTÖRUNGSFREIEN PRÜFEN EINES SCHWEISSVERBINDERS, PRÜFVORRICHTUNG UND ULTRASCHALLSCHWEISSGERÄT MIT EINER SOLCHEN VORRICHTUNG**
TESTING METHOD FOR NON-DESTRUCTIVE TESTING OF A WELDED CONNECTOR, A TESTING DEVICE AND AN ULTRASONIC WELDING APPARATUS HAVING SUCH A DEVICE
PROCEDE DE CONTROLE NON DESTRUCTIF D'UN ENSEMBLE SOUDE, DISPOSITIF DE CONTROLE ET APPAREIL A SOUDER PAR ULTRASONS COMPORTANT UN TEL DISPOSITIF

(30) Priorität: 10.11.1997 DE 19749682
(43) Veröffentlichungstag der Anmeldung: 30.08.2000
(73) Patentinhaber: SCHUNK Ultraschalltechnik GmbH, D-35435 Wettenberg (DE)
(72) Erfinder: EDER, Erich, D-84149 Velden (DE); REITHMAIER, Josef, D-84175 Gerzen (DE)
(74) Vertreter: HOFFMANN - EITLE
(86) Internationale Anmeldenummer: EP9807166
(87) Internationale Veröffentlichungsnummer: WO99024810

(56) Entgegenhaltungen:
- DE-C- 4 447 073
- US-A- 4 826 067
- US-A- 5 412 997

## Beschreibung

### Technisches Gebiet

Die Erfindung betrifft ein Prüfverfahren zum zerstörungsfreien Prüfen eines Schweißverbinders, der aus mehreren, durch Ultraschallschweißen zu einem Bündel miteinander verbundenen Litzen elektrischer Leitungen besteht. Ferner bezieht sich die Erfindung auf eine Prüfvorrichtung zur Durchführung des vorgenannten Prüfverfahrens und auf ein Ultraschallschweißgerät, das eine derartige Prüfvorrichtung umfaßt.

Unter dem Begriff "Schweißverbinder" sind hier alle Schweißverbindungen zu subsummieren, die insbesondere folgende Eigenschaften aufweisen. Erstens sind zwei oder mehr abisolierte Litzen durch ein Ultraschallschweißverfahren miteinander verbunden. Eine Litze einer elektrischen Leitung oder eines Kabels besteht dabei aus einer Anzahl von Einzeldrähten. Die Einzeldrähte sind zur Leitung eines elektrischen Stromes bestimmt und bestehen normalerweise aus Kupfer oder einem anderen, in diesem technischen Fachgebiet hinlänglich bekannten Material. Kennzeichnend für das Ultraschallschweißverfahren ist, daß durch Schwingungen eine Erwärmung an den einzelnen, miteinander zu verbindenden Einzeldrähten hervorgerufen wird, desgleichen die Oberflächen der Einzeldrähte aufgerissen, Rauhigkeiten eingeebnet und damit eine Verschweißung erreicht wird. Meistens werden die abisolierten Litzen parallel zueinander angeordnet und dann zylinderförmig mit einem irgendwie gearteten Abschnitt über eine vorbestimmte Länge miteinander verschweißt. Insbesondere wird auch durch Zusammenpressen der aneinanderliegenden Einzeldrähte der Verbindungsvorgang unterstützt.

### Stand der Technik

Bei der Herstellung von Kabelbäumen sind sehr oft Schweißverbinder der beschriebenen Art anzufertigen. Hier kann es sich um Kabelbäume für Personenkraftwagen, Nutzfahrzeuge wie auch für Bauteile von Flugzeugen oder Schiffen handeln. Bei der Herstellung eines Kabelbaums auf einem sogenannten Zusammenbaubrett wird mit einer Ultraschallschweißvorrichtung direkt am Kabelbaum ein Schweißverbinder hergestellt, um eine elektrische Verbindung zwischen mehreren elektrischen Leitungen zu schaffen.

Würde sich nun erst bei eingebautem Kabelbaum herausstellen, daß eine Schweißverbindung nicht ausreichend bzw. einwandfrei ist, das heißt, keine einwandfreie elektrische Verbindung darstellt oder keine ausreichende mechanische Festigkeit (Verbindung) aufweist, so müßte der gesamte schadhafte Kabelbaum wieder ausgebaut und durch einen neuen ersetzt werden. Das ist sehr teuer und aufwendig. Entsprechend ist es gerade bei der heutigen Just-In-Time-Fertigung im Fahrzeugbau, die eine Verzögerung nicht zuläßt, nicht akzeptabel, daß Kabelbäume eingebaut werden, die fehlerbehaftete oder schadhafte Schweißverbinder besitzen.

Dementsprechend hat man versucht, Prüfverfahren zu entwickeln, die vor dem Einbau der Kabelbäume eine Prüfung der hergestellten Schweißverbinder (Schweißverbindungen) zulassen. Tatsächlich konnte man aber bisher nur Prüfungen durchführen, die mit einer Zerstörung des Schweißverbinders einhergingen. Hierzu hat man Schäl- und Biegetests entwickelt, es wurden Zugversuche durchgeführt und Schliffbilder untersucht. Zum einen ist dies aus wirtschaftlichen Gründen inakzeptabel, da dabei auch einwandfreie Schweißverbinder zerstört werden und der Aufwand sehr groß ist. Zum anderen ist dieses Prüfverfahren natürlich nur stichprobenartig durchzuführen, womit die Gefahr bestehen bleibt, daß fehlerhafte Kabelbäume verbaut werden.

Aufgrund dessen versuchte man bereits im Ultraschallschweißgerät die Schweißeigenschaften zu kontrollieren. Dazu wurde eine interne Qualitätsüberwachung in der Anlage eingebaut. Mit diesem sogenannten Inspector werden eine Vielzahl von Fehlerquellen überwacht,-wie beispielsweise oxidierte Leitungen, Fett- oder Öleinschlüsse in der Schweißverbindung, Kupferqualität. Außerdem hat man die Schweißverbindung vermessen, um aus dem Höhen- und Breitenverhältnis den Verdichtungsgrad zu ermitteln. Aber auch dieses Prüfungsverfahren ist aufwendig und ungenau.

Des weiteren hat man versucht, über eine Klangprüfung zu ermitteln, ob schon während des Schweißvorgangs eine Aussage über die Qualität der Schweißverbindung gemacht werden kann. Dabei wurden verschiedene negative Einflußmöglichkeiten auf die Schweißverbindung simuliert. Dieses Verfahren hat jedoch zu keinem positiven Ergebnis geführt. Des weiteren wurde die Möglichkeit einer Ultraschall- oder Wirbelstromprüfung erörtert, da diese Methoden bereits zur Überprüfung von Einschlüssen in gegossenen Materialien oder der Beurteilung der Qualität einer Schweißnaht verwandt werden. Diese Zusammensetzung ist jedoch mit denen in einem Schweißverbinder der vorgenannten Art nicht vergleichbar, da es sich im Gegensatz zu den verschweißten Litzen um ein festes Gefüge handelt, was eine Aussage über die Qualität relativ einfach macht.

### Darstellung der Erfindung

Das der Erfindung zugrundeliegende technische Problem besteht darin, ein zerstörungsfreies Prüfverfahren für einen Schweißverbinder der voranstehend genannten Art bereitzustellen, das einfach und zuverlässig und auch prozeßbegleitend eingesetzt werden kann, um eine sichere Aussage über die Schweißverbindung in Hinsicht auf deren Festigkeit und elektrische Leitfähigkeit treffen zu können.

Dieses technische Problem wird durch ein Prüfverfahren mit den Merkmalen des Anspruchs 1 gelöst. Das erfindungsgemäße zerstörungsfreie Prüfverfahren zeichnet sich dadurch aus, daß an zwei oder mehr Mantelflächensegmenten des Schweißverbinders in im wesentlichen aufeinander zu oder in im wesentlichen auf einen gemeinsamen Schnittpunkt gerichteten Richtungen eine definierte Prüfkraft eingeleitet wird.

Der Erfindung liegt der Gedanke zugrunde, das Gefüge eines derartigen Schweißverbinders der erläuterten Art derart mit Druck zu beaufschlagen, daß, sollte ein fehlerbehafteter Schweißverbinder vorliegen, eine erfaßbare Veränderung auftritt, aber bei einwandfreiem Schweißverbinder es zu keiner Veränderung kommt und somit auch keine Zerstörung des Schweißverbinders erfolgt. Erstmals wird erfindungsgemäß das bei schadhaftem Schweißverbinder bereits bei geringer Druckbelastung eintretende "Abrollverhalten" der nur an den Oberflächen der miteinander verschweißten Einzeldrähten der Litzen elektrischer Leitungen ausgenutzt.

Es hat sich durch eine Vielzahl von Versuchen herausgestellt, daß der Abstand zwischen der definierten Prüfkraft und der Kraft, bei der bereits bei fehlerbehaftetem Schweißverbinder eine Schädigung auftritt, relativ groß ist. So beträgt die Prüfkraft, die bei einwandfreiem Schweißverbinder aufgebracht werden kann, etwa das 2,5 bis 1,25-fache der Kraft, die ausreicht, um bei einem fehlerbehafteten Schweißverbinder eine erfaßbare Veränderung herbeizuführen. Beispielsweise konnte bei einem aus kupfernen Einzeldrähten bestehenden Schweißverbinder mit einer Breite von 2,8 mm und einer Höhe von 2,1 mm mit einer Preßstempel-Preßmarkenlänge von 6,5 mm eine Kraft von 1000 N als Prüfkraft als geeignet zur zerstörungsfreien Überprüfung ermittelt werden.

Natürlich hängt die aufzubringende Prüfkraft vom Querschnitt, der Größe und dem Material der einzelnen Drähte der Litzen elektrischer Leitungen ab, wie auch von den einzustellenden Schweißbedingungen am Ultraschallschweißgerät. Erfindungsgemäß wird aber erstmals ein Prüfverfahren zum zerstörungsfreien Prüfen eines solchen Schweißverbinders bereitgestellt, das auf eine Druckprüfung abstellt. Hierzu ist natürlich erforderlich, daß die Prüfkraft soweit als möglich ohne Kerbwirkung in den Schweißverbinder eingebracht wird und außerdem ein ausreichender Freiraum am Umfang des Schweißverbinders verbleibt, damit bei schadhaftem Schweißverbinder ein Abrolleffekt und somit ein "Aufgehen" der Einzeldrähte erfolgen und beobachtet werden kann. Das heißt, daß die zum Einbringen der Prüfkraft beispielsweise geeigneten Aufnahmebacken in einer Prüfvorrichtung sich nicht über den gesamten Umfang der Mantelfläche erstrecken dürfen. Aufgrund dessen ist es sehr vorteilhaft, wenn die definierte Prüfkraft als Streckenlast im wesentlichen entlang von Mantellinien oder schmalen Mantelflächensegmenten des Schweißverbinders aufgebracht wird.

Dadurch, daß die Prüfkraft von einem unteren Wert beginnend bis zur definierten Prüf kraft kontinuierlich gesteigert wird, insbesondere der Anstieg linear erfolgt, ist eine beginnende Schädigung bzw. ein "Abrollen" der einzelnen Drähte im Schweißverbinder sehr schnell erfaßbar. Insbesondere wenn der Kraftverlauf registriert und ausgewertet wird, kann eine Schädigung sehr schnell erfaßt und in gewünschter Weise gemeldet werden, beispielsweise durch eine optisch oder akustische Anzeige.

Wie bereits erläutert, ist die definierte Prüfkraft von der Art des Schweißverbinders sowie von den Bedingungen beim Ultraschallschweißen abhängig. Allgemein gültig kann aber gesagt werden, daß die definierte Prüfkraft 2,5 bis 1,25mal höher ist, als eine Kraft, die bei einem fehlerbehafteten Schweißverbinder zu einer ersten erfaßbaren Veränderung führt.

Grundsätzlich werden Schweißverbinder der genannten Art im Querschnitt quadratisch oder rechteckförmig ausgebildet. Bei derartigen Schweißverbindern erfolgt die Krafteinbringung bevorzugtermaßen an zwei gegenüberliegenden Längskantenbereichen. Entsprechend wird bei ovalen oder ellipsenförmigen Querschnitten die Kraft an den einander gegenüberliegenden Haupt- oder Nebenscheiteln eingeleitet. In gleicher Weise erfolgt bei symmetrischen Querschnitten die Kraftanleitung vorteilhafterweise an gegenüberliegenden Mantelflächensegmenten im Bereich der Symmetrieachse. Ansonsten ist natürlich auch eine Kraftanleitung an zwei oder mehr Längskantenbereichen oder allgemein Mantelflächensegmenten möglich und zweckmäßig.

Eine Prüfvorrichtung zur Durchführung des vorgenannten Prüfverfahrens umfaßt die Merkmale des Anspruchs 11. Die Prüfvorrichtung zeichnet sich durch zwei oder mehr im wesentlichen aufeinander zu oder in im wesentlichen auf einen gemeinsamen Schnittrichtung gerichteten Richtungen bewegbare Aufnahmebacken auf, die jeweils so geformt sind, daß ein zu prüfender Schweißverbinder entlang eines Mantelflächensegmentes ergreifbar ist. Außerdem ist ein Mittel zum Zusammendrücken der Aufnahmebacken mit einer definierten Prüfkraft vorzusehen, die so hoch ist, daß bei einem einwandfreien Schweißverbinder keine Schädigung erfolgt, es jedoch bei einem fehlerbehafteten Schweißverbinder zu einer erfaßbaren Veränderung kommt.

Hierzu können die Aufnahmebacken entsprechend den Querschnitten des zu prüfenden Schweißverbinders verschiedenste Ausgestaltungen haben. Beispielsweise ist eine Keilform mit oder ohne parallel zueinander ausgerichteten Riefen, Einkerbungen oder dergleichen in der Innenfläche zum Anlegen an den Schweißverbinder geeignet. Es sind aber auch konkave oder konvexe Aufnahmebacken insbesondere bei runden oder ovalen Querschnitten zweckmäßig.

Bei einer bevorzugten Ausführungsform der Prüfvorrichtung ist ein Prüfkraftbegrenzungsmittel vorgesehen, das die maximal aufbringbare Prüfkraft begrenzt. Entsprechend kann die Prüfkraft der Art des zu prüfenden Schweißverbinders angepaßt werden.

Grundsätzlich kann eine Schädigung des Schweißverbinders visuell erfaßt werden, da es bei Schädigung des Schweißverbinders zu einem "Abrollen" kommt, wodurch sich die äußere Form des Prüflings verändert. Vorteilhafterweise wird aber ein Erfassungsmittel, beispielsweise in Form eines Dehnungsstreifens, Kraftmeßsensors oder dergleichen, vorgesehen, mit dem die bei einem fehlerbehafteten Schweißverbinder auftretende Veränderung erfaßbar ist. Dies kann auch beispielsweise ein Wegmeßsensor sein. Auf der Grundlage eines von dem Erfassungsmittel ausgegebenen Fehlersignals gibt dann eine Anzeigeeinrichtung eine akustische und optische Fehlererkennung aus.

Die Einbringung oder Aufbringung der Kraft erfolgt vorteilhafterweise mit pneumatischer oder hydraulischer Unterstützung, kann aber natürlich auch per Hand - bei kleinen Querschnitten und kleinen Prüfkräften - aufgebracht werden.

Dadurch, daß eine derartige Prüfvorrichtung in ein Ultraschallschweißgerät zum miteinander Verschweißen von mehreren, jeweils aus Einzeldrähten bestehenden Litzen elektrischer Leitungen zu einem im Querschnitt polygonalen, runden oder ovalen Schweißverbinder eingebaut wird oder diesem Gerät direkt nachgeschaltet wird, kann eine 100%-Prüfung in bequemer und kostengünstiger Art durchgeführt werden.

### Kurze Beschreibung der Zeichnungen

Im folgenden sind zur weiteren Erläuterung und zum besseren Verständnis mehrere Ausführungsformen der Erfindung unter Bezugnahme auf die beigefügten Zeichnungen näher beschrieben und erläutert. Es zeigt:
- Fig. 1: eine schematische Seitenansicht auf einen zu prüfenden Schweißverbinder, der aus mehreren, durch Ultraschallschweißen zu einem Bündel miteinander verbundenen Litzen elektrischer Leitungen besteht,
- Fig. 2: eine schematische Seitenansicht auf eine weitere Ausgestaltung eines zu prüfenden Schweißverbinders,
- Fig. 3: eine schematische Darstellung einer erfindungsgemäßen Prüfvorrichtung, hier einer Prüfzange, zum zerstörungsfreien Prüfen eines im Querschnitt quadratischen Schweißverbinders,
- Fig. 4: eine schematische Darstellung des Prüfvorganges an einem quadratischen Schweißverbinder,
- Fig. 5: eine schematische Seitenansicht auf eine erfindungsgemäße Prüfvorrichtung mit zerstörtem Schweißverbinder,
- Fig. 6: eine vergrößerte Ansicht des zerstörten Schweißverbinders gemäß der Fig. 5,
- Fig. 7: eine schematische Ansicht zur Veranschaulichung einer anderen Ausbildung der Form der Aufnahmebacken,
- Fig. 8: eine schematische Darstellung der Ausbildung von Aufnahmebacken für einen im Querschnitt runden Schweißverbinders,
- Fig. 9: eine weitere Ausgestaltung von Aufnahmebacken für einen Schweißverbinder mit rundem Querschnitt,
- Fig. 10: eine weitere Ausführungsform der Form von Aufnahmebacken für einen Schweißverbinder mit rundem Querschnitt,
- Fig. 11: schematische Darstellung des Prüfvorganges eines im Querschnitt dreieckförmigen Schweißverbinders und der hierfür beispielhaft vorgesehenen Aufnahmebacken,
- Fig. 12: eine perspektivische Ansicht auf einen zu prüfenden Endschweißverbinder, der zur Veranschaulichung nur in einem Aufnahmebacken eingelegt ist.

### Beschreibung von Ausführungsbeispielen der Erfindung

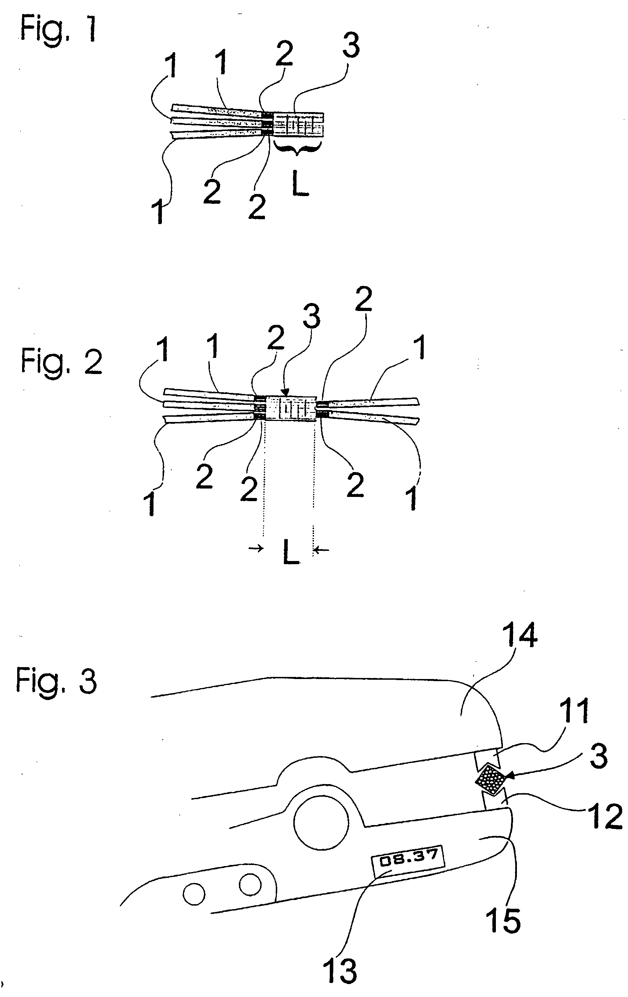

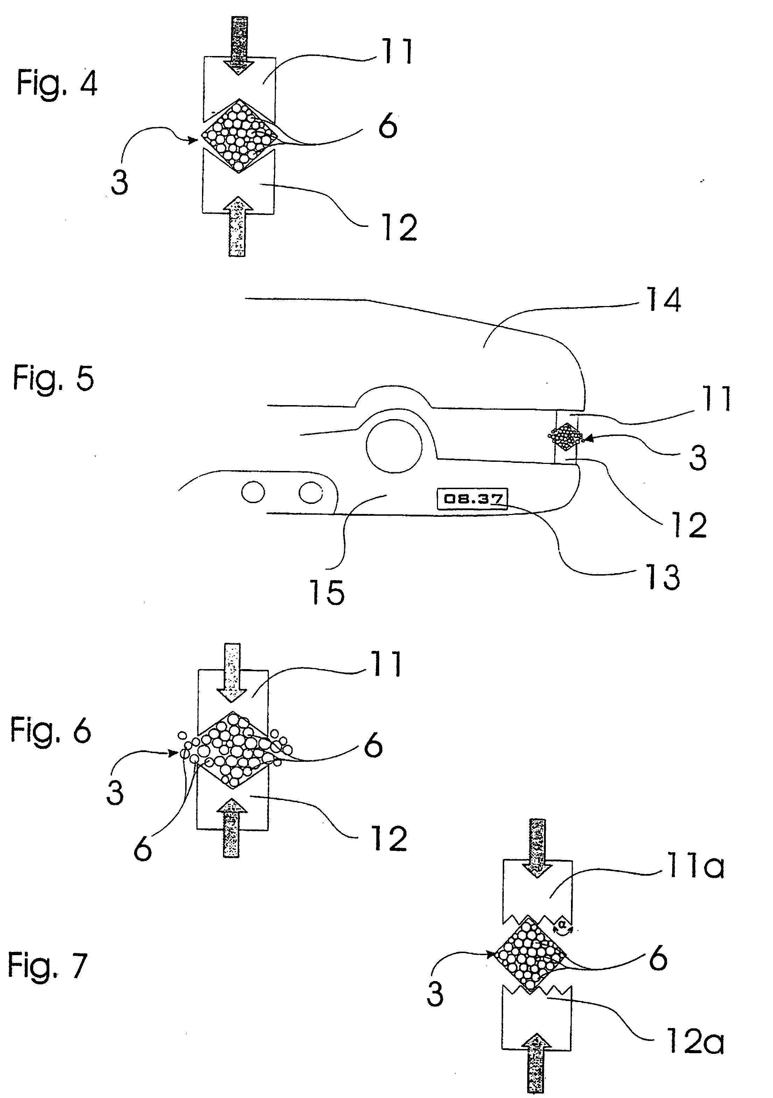

Der grundsätzliche Aufbau eines mit dem erfindungsgemäßen Prüfverfahren auf eine einwandfreie Verschweißung zu prüfenden Schweißverbinders 3 ist insbesondere aus den Fig. 1, 2 und 12 ersichtlich. Grundsätzlich besteht ein zu prüfender Schweißverbinder 3 aus mehreren abisolierten Litzen 2 elektrischer Leitungen 1. Jede Litze 2 einer elektrischen Leitung 1 bestehen aus einer Vielzahl von Einzeldrähten 6, wie es beispielsweise aus dem in Fig. 4 gezeigten Querschnitt ersichtlich ist. Über eine Länge L sind die einzelnen Litzen 2 der elektrischen Leitungen 1 bzw. genauer gesagt die Einzeldrähte 6 der Vielzahl von Litzen 2 mit einem Ultraschallschweißgerät parallel nebeneinander liegend miteinander verbunden worden. Das heißt, daß durch eine Kombination aus Schwingungsfrequenz und mechanischem Druck die einzelnen Litzen 2 bzw. Einzeldrähte 6 an der Oberfläche miteinander "verkleben". Dies ergibt einen guten elektrischen Kontakt. Üblicherweise werden beim Ultraschallschweißen rechteckförmige oder quadratische Querschnitte geformt. Es sind aber natürlich auch runde, ovale, ellipsenförmige oder auch allgemein polygonale Querschnitte herstellbar.

Bei dem in Fig. 1 gezeigten Schweißverbinder handelt es sich um einen sogenannten Endschweißverbinder 3. Ein Endschweißverbinder 3 ist dadurch gekennzeichnet, daß alle abisolierten Litzen 2 der elektrischen Leitungen 1 auf der gleichen Seite des Schweißverbinders 3 parallel zueinander liegen. Im Gegensatz hierzu ist in der Fig. 2 ein Schweißverbinder 3 gezeigt, bei dem die abisolierten Litzen 2 verschiedener Leitungen 1 von zwei Stirnseiten her zusammenlaufen. Aber auch diese Litzen 2 sind parallel zueinander angeordnet.

Unabhängig vom Querschnitt des Schweißverbinders 3 muß sowohl die elektrische Verbindung des Schweißverbinders wie auch die mechanische Festigkeit sichergestellt sein. Hierzu wird gemäß der Erfindung eine Prüfzange verwendet, wie sie beispielsweise in der Fig. 3 gezeigt ist. Die Prüfzange umfaßt ein Zangenoberteil 14 und ein Zangenunterteil 15. Im Zangenunterteil ist eine die Prüfkraft darstellende Anzeige 13 integriert. Das Zangenoberteil 14 und das Zangenunterteil 15 sind über ein Gelenk drehbar miteinander verbunden. Jedes Zangenteil umfaßt einen Aufnahmebacken 11, 12.

Bei dem in Fig. 3 gezeigten Ausführungsbeispiel der Prüfzange sind die Aufnahmebacken 11, 12 keilförmig ausgestaltet. Die Keilform ist so gewählt, daß der hierin eingeschlossene Winkel größer ist als der Eckwinkel des Schweißverbinders 3. Der Schweißverbinder 3 wird zur Prüfung in die Aufnahmebacken 11, 12 eingelegt, so daß er an den diagonalen Längskanten des Schweißverbinders 3 mit der noch aufzubringenden Prüfkraft beaufschlagt wird. Dazu werden die Aufnahmebacken 11, 12 aufeinanderzubewegt. Dies ist schematisch in der Fig. 4 dargestellt. Bei einwandfreiem Schweißverbinder 3 kommt es durch die aufgebrachte Prüfkraft zu keiner erfaßbaren, hier visuell erfaßbaren, Veränderung.

Im Gegensatz hierzu ist in der Fig. 5 bei der gleichen Prüfkraft eine Veränderung des Schweißverbinders 3 u.a. visuell erkennbar. Der Schweißverbinder 3 ist durch die über die Aufnahmebacken 11, 12 aufgebrachte Prüfkraft beschädigt. Es kommt zu einem "Abrollen" der an der Oberfläche miteinander verbundenen Einzeldrähte 6 der einzelnen Litzen 2. Das heißt, die Oberflächenverbindungen der Einzeldrähte 6 der Litzen 2 brechen auf; die Einzeldrähte 6 "rollen" aneinander ab. Eine vergrößerte Darstellung dieses "Abrollverhaltens" ist insbesondere aus der Fig. 6 ersichtlich.

In der Fig. 7 ist eine weitere Ausgestaltung der Form der Aufnahmebacken 11a und 12a gezeigt. Diese Aufnahmebacken 11a, 12a weisen mehrere parallel zueinander verlaufende keilförmige Rillen auf. Jede Rille hat einen Innenwinkel α, der größer ist als der Außenwinkel der durch die Aufnahmebacken 11a, 12a zu ergreifenden Längskantenbereiche des Schweißverbinders 3. Damit wird die Prüfkraft über die Aufnahmebacken 11a, 12a lediglich an den einander gegenüberliegenden Längskantenbereichen in den zu prüfenden Schweißverbinder 3 eingeleitet.

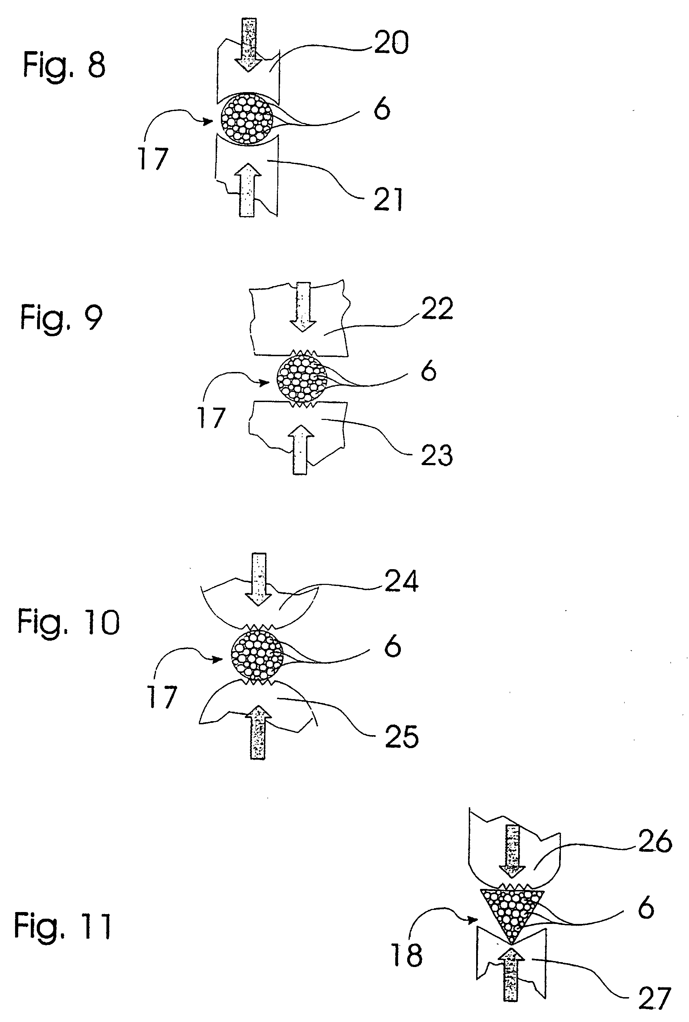

Aus der Fig. 8 ist die Ausgestaltung von Aufnahmebacken 20, 21 für einen im Querschnitt runden Schweißverbinder 17 schematisch dargestellt. Der im Querschnitt runde Schweißverbinder 17 besteht wiederum aus im Ultraschallschweißverfahren miteinander verbundenen Einzeldrähten 6. Zum Einbringen der Prüfkraft an zwei gegenüberliegenden, schmalen Mantelflächensegmenten des Schweißverbinders 17 sind die Aufnahmebacken 20, 21 jeweils konkav ausgebildet. Die Radien der Aufnahmebacken 20, 21 sind dabei größer gewählt als der Radius des Querschnitts des aufzunehmenden Schweißverbinders 17.

Es ist aber auch für die Prüfung eines im Querschnitt runden Schweißverbinders 17 möglich, die Aufnahmebacken entsprechend der Fig. 9 auszubilden. Die hier gezeigten Aufnahmebacken 22, 23 sind flach und weisen nur minimale Einrillungen auf, um ein Weggleiten oder -rutschen des zu prüfenden Schweißverbinders 17 zu verhindern. Diese Einrillungen, Einkerbungen oder Riefen in den Aufnahmebacken 22, 23 sollen jedoch keine Kerbwirkung am zu prüfenden Schweißverbinder 17 entfalten.

Eine weitere Ausgestaltung der Aufnahmebacken für einen im Querschnitt runden oder auch andersförmigen Schweißverbinder 17 ist aus der Fig. 10 ersichtlich. Hier sind die Aufnahmebacken 24, 25 konvex ausgebildet, um den zu prüfenden Schweißverbinder 17 an zwei gegenüberliegenden schmalen Mantelflächensegmenten zu ergreifen. Vorteilhafterweise weisen die beiden Aufnahmebacken 24, 25 zum Verhindern eines Weggleitens oder Wegrutschens des zu prüfenden Schweißverbinders 17 winzige Riefen oder dergleichen auf. Die Radien der Aufnahmebacken 24, 25 können hier relativ beliebig gewählt werden, sollten vorteilhafterweise aber zumindest gleich oder größer sein als der Radius des zu prüfenden Scheißverbinders 17.

In der Fig. 11 ist schließlich die Form von Aufnahmebacken für einen im Querschnitt dreieckförmigen Schweißverbinder 18 gezeigt. Bei der hier gezeigten Ausführungsform ist ein Aufnahmebacken 26 konvex ausgebildet. Der andere Aufnahmebacken 27 weist, wie zuvor erläutert, eine Keilform auf. Der zu prüfende Schweißverbinder 18 wird hier an einer Längskante an den keilförmigen Aufnahmebacken 27 aufgelegt. Die gegenüberliegende Flachseite des Schweißverbinders 18 wird durch den konvexen Aufnahmebacken 26 gehalten.

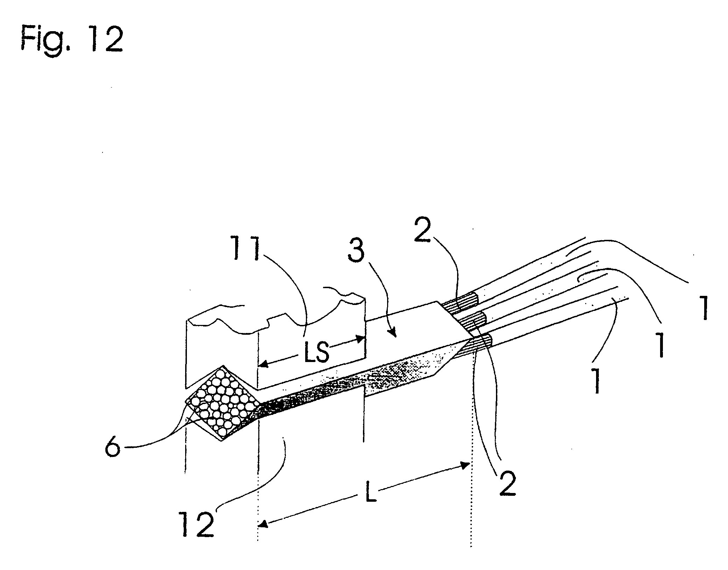

Zur verdeutlichung der Aufnahme eines zu prüfenden Schweißverbinders 3 und wie dieser in den Aufnahmebacken zu halten ist, zeigt die Fig. 12 eine perspektivische Ansicht. Der hier dargestellte Schweißverbinder besteht aus drei zusammenlaufenden, abisolierten Litzen 2 elektrischer Leitungen 1. Im Ultraschallschweißverfahren sind die Einzeldrähte 6 der Litzen 2 auf einer Länge L im Querschnitt quadratisch verschweißt und zusammengedrückt worden. Hier handelt es sich also um einen Endschweißverbinder. Der Schweißverbinder 3 wird nun in zwei einander gegenüberliegende keilförmige Aufnahmebacken 11 (hier ist nur ein Aufnahmebacken gezeigt) eingelegt. Jeder Aufnahmebacken hat eine Länge LS, die hier kleiner ist als die Länge des Schweißverbinders 3. Die Länge LS kann aber auch der Länge L des Schweißverbinders entsprechen. Der im Querschnitt quadratische Schweißverbinder 3 wird durch die keilförmigen Aufnahmebacken 11 an zwei gegenüberliegenden Längskantenbereichen gehalten und mit einer Prüfkraft beaufschlagt. Die Prüfkraft wird hier optimalerweise nur im sehr schmalen Längskantenbereich des Schweißverbinders diagonal eingeleitet.

Ein beispielhafter Endschweißverbinder 3, der geprüft wurde, wies eine Länge von etwa 15 mm auf. Er hatte eine Höhe von 2,1 mm und eine Breite von 2,8 mm. Die Schweißstempel-Preßmarken vom Ultraschallschweißgerät hatten eine Länge von 6,5 mm. Die zur Prüfung des die vorgenannten Abmessungen und Merkmale aufweisenden Schweißverbinders 3 über die keilförmigen Aufnahmebacken 11, 12 aufgebrachte Prüfkraft betrug 1000 N. Bei der aufgebrachten Prüfkraft von 1000 N konnte keine Veränderung des Schweißverbinders 3 beobachtet werden. Damit konnte die Schweißverbindung als ausreichend und einwandfrei beurteilt werden. Bei nicht korrekter Verschweißung des Schweißverbinders hätte bereits bei ungefähr 600 - 700 N eine erfaßbare Veränderung bzw. Beschädigung des Schweißverbinders beobachtet werden können. Das heißt, der sogenannte Abrolleffekt wäre aufgetreten.

Wie bereits in der Beschreibungseinleitung dargelegt wurde, ist selbstverständlich, daß das Aufbringen der Prüfkraft mittels zweier oder mehrerer Aufnahmebacken auch bereits im Ultraschallschweißgerät direkt nach dem Schweißvorgang durchgeführt werden kann.

## Patentansprüche

1. Prüfverfahren zum zerstörungsfreien Prüfen eines Schweißverbinders (3, 17, 18), der aus mehreren durch Ultraschallschweißen zu einem Bündel miteinander verbundenen Litzen (2) elektrischer Leitungen (1) besteht, bei dem eine definierte Prüfkraft an zwei oder mehr Mantelflächensegmenten des Schweißverbinders (3, 17, 18) in im wesentlichen aufeinander zu oder in im wesentlichen auf einen gemeinsamen Schnittpunkt gerichteten Richtungen eingeleitet wird.

2. Prüfverfahren nach Anspruch 1, **dadurch gekennzeichnet, daß** die definierte Prüfkraft als Streckenlast im wesentlichen entlang von Mantellinien oder schmalen Mantelflächensegmenten des Schweißverbinders (3, 17, 18) eingeleitet wird.

3. Prüfverfahren nach Anspruch 1 oder 2, **dadurch gekennzeichnet**, daβ die Prüfkraft von einem unteren Wert beginnend bis zur definierten Prüfkraft kontinuierlich gesteigert wird.

4. Prüfverfahren nach Anspruch 3, **dadurch gekennzeichnet, daß** der Anstieg linear erfolgt.

5. Prüfverfahren nach einem der vorhergehenden Ansprüche, **dadurch gekennzeichnet, daß** die Prüfkraft 2,5 bis 1,25 mal höher ist als eine Kraft, die bei einem fehlerbehafteten Schweißverbinder zu einer ersten erfaßbaren Veränderung führt.

6. Prüfverfahren nach einem der vorhergehenden Ansprüche, **dadurch gekennzeichnet, daß** bei polygonalem Querschnitt des Schweißverbinders (3) die definierte Prüfkraft zumindest an zwei einander gegenüberliegenden Längskanten, insbesondere diagonal gegenüberliegenden Längskanten, eingeleitet wird.

7. Prüfverfahren nach einem der Ansprüche 1 bis 5, **dadurch gekennzeichnet, daß** bei polygonalem, inbesondere bei ungeradzahligem polygonalen Querschnitt des Schweißverbinders (18) die definierte Prüfkraft entlang zumindest einer Längskante und eines dieser Längskante gegenüberliegenden Mantelflächenbereichs eingeleitet wird.

8. Prüfverfahren nach einem der Ansprüche 1 bis 5, **dadurch gekennzeichnet, daß** bei ellipsen- oder ovalförmigem Querschnitt des Schweißverbinders (17) die definierte Prüfkraft an den einander gegenüberliegenden Mantelflächensegmenten im Bereich der Haupt- oder Nebenscheitel eingeleitet wird.

9. Prüfverfahren nach einem der Ansprüche 1 bis 5, **dadurch gekennzeichnet, daß** bei symmetrischem Querschnitt des Schweißverbinders (17) die definierte Prüfkraft an den einander gegenüberliegenden Mantelflächensegmenten im Bereich der Symmetrieachse eingeleitet wird.

10. Prüfverfahren nach einem der vorhergehenden Ansprüche, **dadurch gekennzeichnet, daß** die definierte Prüfkraft auf einer Teillänge des Schweißverbinders (3, 17, 18) eingeleitet wird, die zumindest 20% der Gesamtlänge des Schweißverbinders (3, 17, 18) beträgt.

11. Prüfvorrichtung zum zerstörungsfreien Prüfen eines Schweißverbinders (3, 17, 18), der aus mehreren durch Ultraschallschweißen zu einem Bündel miteinander verbundenen Litzen (2) elektrischer Leitungen (1) besteht, mit
- zwei oder mehr im wesentlichen aufeinander zu oder in im wesentlichen auf einen gemeinsamen Schnittpunkt gerichteten Richtungen (3, 17, 18) bewegbaren Aufnahmebacken (11, 12; 20, 21; 22, 23; 24, 25; 26, 27), die jeweils so geformt sind, daß ein zu prüfender Schweißverbinder (3, 17, 18) entlang eines Mantelflächensegmentes ergreifbar ist, und
- einem Mittel zum Zusammendrücken der Aufnahmebacken (11, 12; 20, 21; 22, 23; 24, 25; 26, 27) mit einer definierten Prüfkraft, die so hoch ist, daß bei einem einwandfreien Schweißverbinder keine Schädigung erfolgt, es jedoch bei einem fehlerbehafteten Schweißverbinder zu einer erfaßbaren Veränderung kommt.

12. Prüfvorrichtung nach Anspruch 11, **dadurch gekennzeichnet**, d a ß zumindest eine Aufnahmebacke (11, 12) auf der zur Aufnahme des Schweißverbinders (3, 17, 18) vorgesehenen Seite keilförmig ausgebildet ist, wobei der Innenwinkel größer ist als der Eckwinkel des aufzunehmenden Längskantenbereichs des Schweißverbinders (3, 18).

13. Prüfvorrichtung nach Anspruch 11, **dadurch gekennzeichnet, daß** die Innenfläche zumindest einer Aufnahmebacke (11a, 12a) mehrere, parallel zueinander ausgerichtete Rillen aufweist.

14. Prüfvorrichtung nach Anspruch 11, **dadurch gekennzeichnet**, d a ß die Innenfläche zumindest einer Aufnahmebacke (20, 21) konkav ausgebildet ist.

15. Prüfvorrichtung nach Anspruch 11, **dadurch gekennzeichnet, daß** die Innenfläche zumindest einer Aufnahmebacke (24, 25) konvex ausgebildet ist.

16. Prüfvorrichtung nach Anspruch 11, **dadurch gekennzeichnet, daß** die Innenfläche zumindest einer Aufnahmebacke (22, 23) im wesentlichen eben ausgebildet ist, wobei kleine Einrillungen, Vertiefungen, Riffen oder dergleichen eingearbeitet sind.

17. Prüfvorrichtung nach Anspruch 11, **dadurch gekennzeichnet**, d a ß ein Prüfkraftbegrenzungsmittel vorgesehen ist, das die maximal aufbringbare Prüfkraft begrenzt.

18. Prüfvorrichtung nach Anspruch 11, **dadurch gekennzeichnet, daß** ein Erfassungsmittel vorgesehen ist, mit dem die bei einem fehlerbehafteten Schweißverbinder (3) auftretende Veränderung erfaßt wird.

19. Prüfvorrichtung nach Anspruch 18, **dadurch gekennzeichnet, daß** das Erfassungsmittel einen Wegmeßsensor umfaßt.

20. Prüfvorrichtung nach Anspruch 18, **dadurch gekennzeichnet**, d a ß das Erfassungsmittel einen Kraftmeßsensor umfaßt.

21. Prüfvorrichtung nach Anspruch 18, **dadurch gekennzeichnet, daß** eine Anzeigeeinrichtung (13) vorhanden ist, die auf der Grundlage eines von dem Erfassungsmittel ausgegebenen Fehlersignals eine akustische oder optische Fehlererkennung ausgibt .

22. Prüfvorrichtung nach einem der Ansprüche 11 bis 21, **dadurch gekennzeichnet, daß** sie als Zange (14, 15) ausgebildet ist, die per Hand, pneumatisch oder hydraulisch betätigbar ist.

23. Ultraschallschweißgerät zum miteinander Verschweißen von mehreren jeweils aus Einzeldrähten (6) bestehenden Litzen (2) elektrischer Leitungen (1) zu einem im Querschnitt polygonalen, runden oder ovalen Schweißverbinder (3, 17, 18), das eine Prüfvorrichtung nach einem der Ansprüche 11 bis 22 umfaßt.

## Claims

1. Test method for the non-destructive testing of a weld connector (3, 17, 18) which consists of a plurality of wires (2) of electric leads (1) connected to one another to form a bundle by ultrasonic welding in which a defined test force is introduced at two or more outer jacket surface segments of the weld connector (3, 17, 18) in directions directed substantially towards one another or substantially at a common point of intersection.

2. Test method according to Claim 1, **characterised in that** the defined test force is introduced as a knife-edge load substantially along outer jacket lines or narrow outer jacket surface segments of the weld connector (3, 17, 18).

3. Test method according to Claim 1 or 2, **characterised in that** the test force is increased continuously starting from a lower value up to the defined test force.

4. Test method according to Claim 3, **characterised in that** the increase ensues in linear manner.

5. Test method according to any of the preceding claims, **characterised in that** the test force is 2.5 to 1.25 times higher than a force resulting in a first detectable change in a defective weld connector.

6. Test method according to any of the preceding claims, **characterised in that** in the case of a polygonal cross-section of the weld connector (3) the defined test force is introduced at least at two longitudinal edges located opposite one another, in particular two diagonally opposed longitudinal edges.

7. Test method according to any of Claims 1 to 5, **characterised in that** in the event of the weld connector (18) having a polygonal, in particular an uneven polygonal cross-section the defined test force is introduced along at least one longitudinal edge and one of the outer jacket surface regions located opposite this longitudinal edge.

8. Test method according to any of Claims 1 to 5, **characterised in that** in the event of the weld connector (17) having an elliptical or oval cross-section the defined test force is introduced at the outer jacket surface segments located opposite one another in the region of the main or secondary apex.

9. Test method according to any of Claims 1 to 5, **characterised in that** in the event of the weld connector (17) having a symmetrical cross-section the defined test force is introduced at the outer jacket surface segments located opposite one another in the region of the axis of symmetry.

10. Test method according to any of the preceding claims, **characterised in that** the defined test force is introduced on a part of the length of the weld connector (3, 17, 18) which amounts to at least 20 % of the total length of the weld connector (3, 17, 18).

11. Test device for the non-destructive testing of a weld connector (3, 17, 18) which consists of a plurality of wires (2) of electric leads (1) connected to one another to form a bundle by ultrasonic welding having
- two or more receiving jaws (11, 12; 20, 21; 22, 23; 24, 25; 26, 27) capable of moving in directions (3, 17, 18) directed substantially towards one another or substantially to a common point of intersection (11, 12; 20, 21; 22, 23; 24, 25; 26, 27) which are each formed in such a way that a weld connector (3, 17, 18) can be grasped along an outer jacket surface segment and
- a means for pressing the receiving jaws (11, 12; 20, 21; 22, 23; 24, 25; 26, 27) together with a defined test force which is of such a magnitude that no damage occurs when a weld connector is sound but results in a detectable change when a weld connector is defective.

12. Test device according to Claim 11, **characterised in that** at least one receiving jaw (11, 12) on the side provided for receiving the weld connector (3, 17, 18) is of wedge-shaped construction, wherein the internal angle is greater than the corner angle of the longitudinal edge region of the weld connector (3, 18) to be accommodated.

13. Test device according to Claim 11, **characterised in that** the internal surface of at least one receiving jaw (11a, 12a) has a multiplicity of channels oriented parallel to one another.

14. Test device according to Claim 11, **characterised in that** the internal surface of at least one receiving jaw (20, 21) is of concave construction.

15. Test device according to Claim 11, **characterised in that** the internal surface of at least one receiving jaw (24, 25) is of convex construction.

16. Test device according to Claim 11, **characterised in that** the internal surface of at least one receiving jaw (22, 23) is of substantially level construction, wherein small grooves, depressions, flutes or the like have been worked in.

17. Test device according to Claim 11, **characterised in that** a means for limiting the test force is provided which limits the maximum applicable test force.

18. Test device according to Claim 11, **characterised in that** a means of detection is provided which detects the change occurring in the case of a defective weld connector (3).

19. Test device according to Claim 18, **characterised in that** the means of detection comprises a sensor for measuring excursion.

20. Test device according to Claim 18, **characterised in that** the means of detection comprises a sensor for measuring force.

21. Test device according to Claim 18, **characterised in that** an indicator device (13) is present which issues an acoustic or optical error alarm on the basis of a error signal output by the means of detection.

22. Test device according to any of Claims 11 to 21, **characterised in that** it is constructed in the form of pincers (14, 15) actuable manually, pneumatically or hydraulically.

23. Ultrasonic welding apparatus for welding to one another flexes (2) of electric leads (2) each consisting of single wires (6) to form a weld connector (3, 17, 18) of polygonal, round or oval cross-section comprising a test device according to any of Claims 11 to 22.

## Revendications

1. Procédé de contrôle non destructif d'un connecteur soudé (3, 17, 18) formé d'une pluralité de torons (2) de lignes électriques (1), reliés ensemble par soudage aux ultrasons pour former un faisceau, pour lequel une force d'essai définie est induite sur deux segments de surface d'enveloppe ou plus du connecteur soudé (3, 17, 18), dans des directions allant sensiblement l'une vers l'autre, ou sensiblement vers un point d'intersection commun.

2. Procédé de contrôle selon la revendication 1, **caractérisé en ce que** la force d'essai définie est induite en tant que charge sur un tronçon, sensiblement le long de lignes d'enveloppe ou d'étroits segments de surface d'enveloppe du connecteur soudé (3, 17, 18).

3. Procédé de contrôle selon la revendication 1 ou 2, **caractérisé en ce que** la force d'essai est augmentée de façon continue, en commençant depuis une valeur inférieure et en allant jusqu'à une force d'essai de valeur définie.

4. Procédé de contrôle selon la revendication 3, **caractérisé en ce que** l'augmentation est linéaire.

5. Procédé de contrôle selon l'une des revendications précédentes, **caractérisé en ce que** la force d'essai est de 2,5 à 1,25 fois supérieure à une force menant à une première modification décelable dans le cas où un connecteur soudé est défectueux.

6. Procédé de contrôle selon l'une des revendications précédentes, **caractérisé en ce que** dans le cas où la section transversale du connecteur soudé (3) est polygonale, la force d'essai définie est induite au moins en deux arêtes longitudinales opposées, en particulier des arêtes longitudinales opposées en diagonale.

7. Procédé de contrôle selon l'une des revendications 1 à 5, **caractérisé en ce que**, dans le cas où le connecteur soudé (18) présente une section transversale polygonale, en particulier polygonale à nombre de côtés impairs, la force d'essai définie est induite le long d'au moins une arête longitudinale et d'une zone de surface d'enveloppe située à l'opposé de cette arête longitudinale.

8. Procédé de contrôle selon l'une des revendications 1 à 5, **caractérisé en ce que**, dans le cas où le connecteur soudé (17) présente une section transversale elliptique ou ovale, la force d'essai définie est induite sur les segments de surface d'enveloppe mutuellement opposés, dans la zone des sommets principaux ou annexes.

9. Procédé de contrôle selon l'une des revendications 1 à 5, **caractérisé en ce que**, dans le cas où le connecteur soudé (17) présente une section transversale symétrique, la force d'essai définie est induite sur les segments de surface d'enveloppe mutuellement opposés, dans la zone de l'axe de symétrie.

10. Procédé de contrôle selon l'une des revendications précédentes, **caractérisé en ce que** la force d'essai définie est induite sur une longueur partielle du connecteur soudé (3, 17, 18), faisant au moins 20 % de la longueur totale du connecteur soudé (3, 17, 18).

11. Dispositif de contrôle non destructif d'un connecteur soudé (3, 17, 18), formé d'une pluralité de torons (2) de lignes électriques (1), reliés ensemble par soudage aux ultrasons pour former un faisceau, comportant :
- deux mâchoires de réception (11, 12; 20, 21; 22, 23; 24, 25; 26, 27) ou plus, déplaçables sensiblement l'une par rapport à l'autre ou bien dans des directions (3, 17, 18) orientées sensiblement vers un point d'intersection commun, mâchoires formées chacune de manière qu'un connecteur soudé (3, 17, 18) à contrôler puisse être saisi le long d'un segment de surface d'enveloppe, et
- un moyen pour comprimer les mâchoires de réception (11, 12; 20, 21; 22, 23; 24, 25; 26, 27) avec une force d'essai définie, d'une valeur si élevée que, dans le cas où l'on a affaire à un connecteur soudé parfait, aucun endommagement ne se produit, sachant que, cependant, une modification décelable se produit lorsque l'on a affaire à un connecteur soudé défectueux.

12. Dispositif de contrôle selon la revendication 11, **caractérisé en ce qu'**au moins une mâchoire de réception (11, 12) est d'allure cunéiforme sur la face prévue pour recevoir le connecteur soudé (3, 17, 18), l'angle intérieur étant supérieur à l'angle de coin de la zone arête longitudinale à recevoir du connecteur soudé (3, 18).

13. Dispositif de contrôle selon la revendication 11, **caractérisé en ce que** la surface intérieure au moins d'une mâchoire de réception (11a, 12a) présente une pluralité de gorges orientées parallèlement les unes aux autres.

14. Dispositif de contrôle selon la revendication 11, **caractérisé en ce que** la surface intérieure d'au moins une mâchoire de réception (20, 21) est concave.

15. Dispositif de contrôle selon la revendication 11, **caractérisé en ce que** la face intérieure d'au moins une mâchoire de réception (24, 25) est convexe.

16. Dispositif de contrôle selon la revendication 11, **caractérisé en ce que** la face intérieure d'au moins une mâchoire de réception (22, 23) est sensiblement plane, aucun creusement en gorge, cavité, cannelure ou analogue n'étant creusé par usinage.

17. Dispositif de contrôle selon la revendication 11, **caractérisé en ce qu'**un moyen de limitation de la force d'essai est prévu, limitant la force d'essai applicable maximale.

18. Dispositif de contrôle selon la revendication 11, **caractérisé en ce qu'**un moyen de détection est prévu à l'aide duquel la modification, survenant dans le cas où l'on a affaire à un connecteur soudé (3) défectueux, est détectée.

19. Dispositif de contrôle selon 1a revendication 18, **caractérisé en ce que** le moyen de détection est un capteur de mesure de déplacement.

20. Dispositif de contrôle selon la revendication 18, **caractérisé en ce que** le moyen de détection est un capteur de mesure de force.

21. Dispositif de contrôle selon la revendication 18, **caractérisé en ce qu'**un dispositif d'affichage (13) est prévu, fournissant une identification de défaut acoustique ou optique, sur la base d'un signal de défaut émis par le moyen de détection.

22. Dispositif de contrôle selon l'une des revendications 11 à 21, **caractérisé en ce qu'**il est réalisé sous la forme de pinces (14, 15), actionnables à la main, pneumatiquement ou hydrauliquement.

23. Appareil de soudage par ultrasons pour le soudage ensemble d'une pluralité de torons (2) de lignes électriques, formés chaque fois de conducteurs individuels (6), pour produire un connecteur soudé (3, 17, 18) dont la section transversale est polygonale, ronde ou ovale, comprenant un dispositif d'essai selon l'une des revendications 11 à 22.
